(19) Europäisches Patentamt
European Patent Office
Office européen des brevets

(11) **EP 1 912 500 B1**

(12) **EUROPEAN PATENT SPECIFICATION**

(45) Date of publication and mention of the grant of the patent:
**24.03.2010 Bulletin 2010/12**

(21) Application number: **06762938.6**

(22) Date of filing: **01.08.2006**

(51) Int Cl.:
***A01N 43/54*** *(2006.01)*

(86) International application number:
**PCT/EP2006/007615**

(87) International publication number:
**WO 2007/014759 (08.02.2007 Gazette 2007/06)**

(54) **A METHOD OF DESICCATING AND/OR DEFOLIATING GLYPHOSATE RESISTANT CROPS**

VERFAHREN ZUM AUSTROCKNEN UND/ODER ENTLAUBEN VON GLYPHOSATERESISTENTEN KULTUREN

PROCEDE DE DESSICCATION ET/OU DE DEFOLIATION DE CULTURES RESISTANTES AU GLYPHOSATE

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.08.2005 US 703892 P**

(43) Date of publication of application:
**23.04.2008 Bulletin 2008/17**

(73) Proprietor: **BASF SE**
**67056 Ludwigshafen (DE)**

(72) Inventors:
- **HARDEN, John**
  **Raleigh, NC 27613 (US)**
- **WESTBERG, Dan, E.**
  **Cary, NC 27511 (US)**
- **OLIVER, Glenn, W.**
  **Apex, NC 27502 (US)**
- **GUICE, John, Bradley**
  **Winnsboro, LA 71295 (US)**
- **EVANS, Rick**
  **Rakeugh, NC 27613 (US)**

(56) References cited:
**WO-A-01/83459**
**WO-A-03/024221**
**WO-A-2004/080183**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 912 500 B1

## Description

The present invention relates to a method of desiccating and/or defoliating glyphosate resistant crops.

Desiccation and/or defoliation of crops is a standard pre-harvest practice in certain crops such as cotton or potato to increase harvest efficiency and crop quality. Glyphosate is used as a harvest aid in certain crops such as cotton to prevent cotton regrowth. Unfortunately, the widespread use of glyphosate resistant crops eliminates the use of glyphosate as a harvest aid in such crops. There is thus a need for an effective and efficient method for the desiccation and/or defoliation of glyphosate resistant crops.

Phenyluracils are known to be useful herbicides. The use of herbicidal phenyluracils as desiccants and/or defoliants is disclosed in WO 01/83459. Furthermore, it is known from WO 03/24221 that combinations comprising phenyluracils and other herbicides including glyphosate and/or certain safeners exhibit synergistically enhanced activity WO 04/080183 discloses combinations of said phenyluracils with certain other herbicides having increased herbicidal activity and improved compatibility with useful plants.

Surprisingly, it has now been found that phenyluracils of formula I or agriculturally acceptable salts thereof, optionally in the presence of glyphosate or agriculturally acceptable salts thereof, optionally in combination with at least one harvest aid, are effective for the desiccation and/or defoliation of glyphosate resistant crops. In particular, it has been found that combinations of phenyluracils of formula I or agriculturally acceptable salts thereof and glyphosate or agriculturally acceptable salts thereof, optionally in combination with at least one harvest aid, are synergistically effective for the desiccation and/or defoliation of glyphosate resistant crops.

The present invention therefore relates to a method of desiccating or defoliating glyphosate resistant crops, which comprises allowing an effective amount of the 3-phenyluracil of formula I

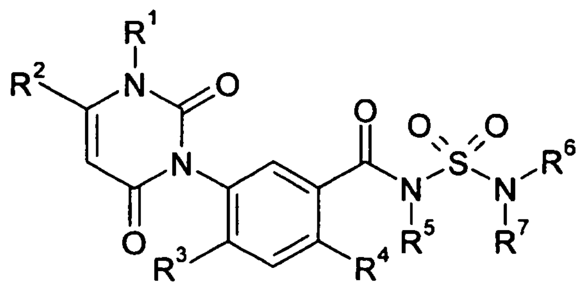

I,

wherein the variables $R^1$ to $R^7$ are as defined below:

$R^1$ is methyl;
$R^2$ is $CF_3$;
$R^3$ is fluoro;
$R^4$ is chloro;
$R^5$ is hydrogen;
$R^6$ is methyl; and
$R^7$ is isopropyl;

or an agriculturally acceptable salt thereof to act on glyphosate resistant crops in combination with glyphosate or an agriculturally acceptable salt thereof.

According to an embodiment the 3-phenyluracils I is used in combination with at least one (one or more) harvest aid.

According to a further preferred embodiment the 3-phenyluracil I is used in combination with glyphosate or an agriculturally acceptable salt thereof (component B) and at least one further harvest aid (component C).

Harvest aids are active ingredients which, alone or in combination lead to the desiccation and/or defoliation of crops.

Preferably, the further harvest aids are selected from the group consisting of ethephon, thidiazuron, diuron, paraquat, sodium chlorate, cyclanilide, S,S,S-tributyl phosphorotrithioate, dimethipin and their agriculturally acceptable salts.

The categorization of the active compounds according to their mode of action is based on current understanding. If an active compound acts by more than one mode of action, this substance was assigned to only one mode of action.

If the phenyluracils I, and/or the further harvest aids are capable of forming geometrical isomers, for example E/Z isomers, it is possible to use both the pure isomers and mixtures thereof in the compositions according to the

invention. If the phenyluracils I, the herbicides B and/or the safeners C have one or more centers of chirality and, as a consequence, are present as enantiomers or diastereomers, it is possible to use both the pure enantiomers and diastereomers and their mixtures in the compositions according to the invention.

The phenyluracils I and/or the further harvest aids (provided they have functional groups which can be ionized) can also be used in the form of their agriculturally acceptable salts. In general, the salts of those cations or the acid addition salts of those acids are suitable whose cations and anions, respectively, have no adverse effect on the action of the active compounds.

Preferred cations are the ions of the alkali metals, preferably of lithium, sodium and potassium, of the alkaline earth metals, preferably of calcium and magnesium, and of the transition metals, preferably of manganese, copper, zinc and iron, furthermore ammonium and substituted ammonium in which one to four hydrogen atoms are replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, methylammonium, isopropylammonium, dimethylammonium, diisopropylammonium, trimethylammonium, tetramethylammonium, tetraethylammonium, tetrabutylammonium, 2-hydroxyethylammonium, 2-(2-hydroxyethoxy)eth-1-ylammonium, di(2-hydroxyeth-1-yl)ammonium, benzyltrimethylammonium, benzyltriethylammonium, furthermore phosphonium ions, sulfonium ions, preferably tri($C_1$-$C_4$-alkyl)sulfonium such as trimethylsulfonium, and sulfoxonium ions, preferably tri($C_1$-$C_4$-alkyl)sulfoxonium.

Anions of useful acid addition salts are primarily chloride, bromide, fluoride, iodide, hydrogen sulfate, methyl sulfate, sulfate, dihydrogen phosphate, hydrogen phosphate, nitrate, dicarbonate, carbonate, hexafluorosilicate, hexafluorophosphate, benzoate and the anions of $C_1$-$C_4$-alkanoic acids, preferably formate, acetate, propionate and butyrate.

According to the invention binary and ternary compositions are used if the 3-phenyluracil of formula I as active compound A is used in combination with at least one further harvest aid (active compound C).

Here and below, the term "binary compositions" includes the composition which comprises the active compound A and glyphosate B. Correspondingly, the term "ternary compositions" includes compositions which comprise the active compound A, glyphosate B and one or more, for example 2 or 3, harvest aids C.

In binary compositions which comprise the 3-phenyluracil of the formula I as component A and glyphosate B, the weight ratio of the active compounds A:B is usually in the range from 1:500 to 10:1, preferably in the range from 1: 100 to 10:1, in particular in the range from 1:50 to 10:1 and particularly preferably in the range from 1:25 to 5:1.

In ternary compositions which comprise the 3-phenyluracil I as component A, glyphosate B and at least one harvest aid C, the relative weight ratios of the components A:B:C are usually in the range from 10:1:1 to 1:500:10, preferably from 10:1:1 to 1:100:10, in particular from 10:1:1 to 1:50:1 and particularly preferably from 5:1:1 to 1:25:5. In these ternary compositions, the weight ratio of glyphosate B to harvest aid C is preferably in the range from 50:1 to 1:10.

For application ready-to-use preparations in the form of crop protection products can be employed. Component A, component B and/or optionally component C may be present in suspended, emulsified or dissolved form and can be formulated jointly or separately. The application forms depend entirely on the intended use.

The preparations can be applied, for example, in the form of directly sprayable aqueous solutions, powders, suspensions, also highly-concentrated aqueous, oily or other suspensions or dispersions, emulsions, oil dispersions, pastes, dusts, materials for spreading or granules, by means of spraying, atomizing, dusting, broadcasting or watering. The use forms depend on the intended use; in any case, they should ensure the finest possible distribution of the active compounds.

Depending on the form in which the ready-to-use preparations are present, they comprise one or more liquid or solid carriers, if appropriate surfactants and if appropriate further auxiliaries which are customary for formulating crop protection products. The person skilled in the art is sufficiently familiar with the recipes for such formulations.

The ready-to-use preparations may comprise auxiliaries which are customary for formulating crop protection products, which auxiliaries may also comprise a liquid carrier.

Suitable inert additives with carrier function are essentially: mineral oil fractions of medium to high boiling point, such as kerosene and diesel oil, furthermore coal tar oils and oils of vegetable or animal origin, aliphatic, cyclic and aromatic hydrocarbons, e.g. paraffins, tetrahydronaphthalene, alkylated naphthalenes and their derivatives, alkylated benzenes and their derivatives, alcohols such as methanol, ethanol, propanol, butanol and cyclohexanol, ketones such as cyclohexanone, strongly polar solvents, e.g. amines such as N-methylpyrrolidone, and water.

Aqueous use forms can be prepared from emulsion concentrates, suspensions, pastes, wettable powders or water-dispersible granules by adding water. To prepare emulsions, pastes or oil dispersions, the active compound (s) as such or dissolved in an oil or solvent, can be homogenized in water by means of wetting agent, tackifier, dispersant or emulsifier. Alternatively, it is possible to prepare concentrates consisting of active substance, wetting agent, tackifier, dispersant or emulsifier and, if desired, solvent or oil, and these concentrates are suitable for dilution with water.

Suitable surfactants are the alkali metal salts, alkaline earth metal salts and ammonium salts of aromatic sulfonic acids, e.g. ligno-, phenol-, naphthalene- and dibutylnaphthalenesulfonic acid, and of fatty acids, of alkyl- and alkylarylsulfonates, of alkyl sulfates, lauryl ether sulfates and fatty alcohol sulfates, and salts of sulfated hexa-, hepta- and octadecanols and of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ether, ethoxylated isooctyl-, octyl- or nonylphenol, alkylphenyl polyglycol ethers, tributylphenyl polyglycol ether, alkylaryl polyether alcohols, isotridecyl alcohol, fatty alcohol/ethylene oxide condensates, ethoxylated castor oil, polyoxyethylene alkyl ether or polyoxypropylene alkyl ether, lauryl alcohol polyglycol ether acetate, sorbitol esters, lignosulfite waste liquors or methylcellulose.

Powders, materials for spreading and dusts can be prepared by mixing or concomitant grinding of the active substances with a solid carrier.

Granules, e.g. coated granules, impregnated granules and homogeneous granules, can be prepared by binding the active ingredient (s) to solid carriers. Solid carriers are mineral earths such as silicas, silica gels, silicates, talc, kaolin, limestone, lime, chalk, bole, loess, clay, dolomite, diatomaceous earth, calcium sulfate, magnesium sulfate, magnesium oxide, ground synthetic materials, fertilizers such as ammonium sulfate, ammonium phosphate, ammonium nitrate, ureas, and products of vegetable origin such as cereal meal, tree bark meal, wood meal and nutshell meal, cellulose powders, or other solid carriers.

The concentrations of the active compound (s) in the ready-to-use preparations can be varied within wide ranges. In general, the formulations comprise from 0.001 to 98% by weight, preferably 0.01 to 95% by weight, of active ingredient (s). The active ingredient (s) are employed in a purity of from 90% to 100%, preferably 95% to 100% (according to NMR spectrum).

The preparations can, for example, be formulated as follows:

I 20 parts by weight of the active compound (s) in question are dissolved in a composition composed of 80 parts by weight of alkylated benzene, 10 parts by weight of the adduct of 8 to 10 mol of ethylene oxide to 1 mol of oleic acid N-monoethanolamide, 5 parts by weight of calcium dodecylbenzenesulfonate and 5 parts by weight of the adduct of 40 mol of ethylene oxide to 1 mol of castor oil. Pouring the solution into 100 000 parts by weight of water and finely distributing it therein gives an aqueous dispersion which comprises 0.02% by weight of the active ingredient.

II 20 parts by weight of the active compound (s) in question are dissolved in a composition composed of 40 parts by weight of cyclohexanone, 30 parts by weight of isobutanol, 20 parts by weight of the adduct of 7 mol of ethylene oxide to 1 mol of isooctylphenol and 10 parts by weight of the adduct of 40 mol of ethylene oxide to 1 mol of castor oil. Pouring the solution into 100 000 parts by weight of water and finely distributing it therein gives an aqueous dispersion which comprises 0.02% by weight of the active ingredient.

III 20 parts by weight of the active compound (s) in question are dissolved in a composition composed of 25 parts by weight of cyclohexanone, 65 parts by weight of a mineral oil fraction of boiling point 210 to 280°C and 10 parts by weight of the adduct of 40 mol of ethylene oxide to 1 mol of castor oil. Pouring the solution into 100 000 parts by weight of water and finely distributing it therein gives an aqueous dispersion which comprises 0.02% by weight of the active ingredient.

IV 20 parts by weight of the active compound (s) in question are mixed thoroughly with 3 parts by weight of sodium diisobutylnaphthalenesulfonate, 17 parts by weight of the sodium salt of a lignosulfonic acid from a sulfite waste liquor and 60 parts by weight of pulverulent silica gel, and the composition is ground in a hammer mill. Finely distributing the composition in 20 000 parts by weight of water gives a spray composition which comprises 0.1% by weight of the active ingredient.

V 3 parts by weight of the active compound (s) in question are mixed with 97 parts by weight of finely divided kaolin. This gives a dust which comprises 3% by weight of the active ingredient.

VI 20 parts by weight of the active compound (s) in question are mixed intimately with 2 parts by weight of calcium dodecylbenzenesulfonate, 8 parts by weight of fatty alcohol polyglycol ether, 2 parts by weight of the sodium salt of a phenolurea-formaldehyde condensate and 68 parts by weight of a paraffinic mineral oil. This gives a stable oily dispersion.

VII 1 part by weight of the active compound (s) in question is dissolved in a composition composed of 70 parts by weight of cyclohexanone, 20 parts by weight of ethoxylated isooctylphenol and 10 parts by weight of ethoxylated castor oil. This gives a stable emulsion concentrate.

VIII 1 part by weight of the active compound (s) in question is dissolved in a composition composed of 80 parts by weight of cyclohexanone and 20 parts by weight of Wettol EM 31 (nonionic emulsifier based on ethoxylated castor oil). This gives a stable emulsion concentrate.

The components A, B and C can be formulated jointly or separately.

The components A, B and C can be applied jointly or separately, simultaneously or successively.

The phenyluracil of formula I or the composition of active ingredients are applied in a rate which provides effective desiccation and/or defoliation.

As desiccants, the 3-phenyluracil I is especially suitable for desiccating the aerial parts of glyphosate resistant crop plants, such as potatoes, oilseed rape, cotton, sunflowers and soybeans, preferably cotton or potato. This allows completely mechanical harvesting of these important crop plants. Readily controllable defoliation of useful plants, in particular cotton, is achieved by using the 3-phenyluracils I for promotion of the formation of abscission tissue between fruit or leaf and shoot of the plants.

The required application rate of the pure active compounds, i.e. of A, in combination with B and/or optionally in combination with C without formulation auxiliary, depends on the crop to be desiccated or defoliated, on the climatic conditions of the location where the composition is used and on the application method. In general, the application rate is from 0.001 to 3 kg/ha, preferably from 0.005 to 2 kg/ha and in particular from 0.01 to 1 kg/ha, from 0.1 g/ha to 1 kg/ha, from 1 g/ha to 500 g/ha or from 5 g/ha to 500 g/ha of active substance.

The preparations are applied to the plants mainly by spraying, in particular foliar spraying. Application can be carried out by customary spraying techniques using, for example, water as carrier and spray liquid rates of from about 50 to 1000 l/ha (for example from 300 to 400 l/ha). Application of the preparations by the low-volume and the ultralow-volume method is possible, as is their application in the form of microgranules.

Glyphosate resistant crop includes a crop which by means of multiple changes of the genome ("stacked traits") exhibits more than glyphosate resistance properties, such as a glyphosate and oxynil, glufosinate, imidazolinone, sulfonylurea, dicamba, cyclohexanedione, PPO, HPPD, fungus or insect resistant crop. Most preferably, the crop of cotton or potato is a glyphosate resistant crop or a crop which by means of multiple changes of the genome ("stacked traits") is both a glyphosate resistant and a insect resistant crop. In a most preferred embodiment of the invention, the crop which exhibits one or more of said resistance mechanisms is a cotton crop.

Resistance may be conferred to crops by genetic engineering. For example, by said techniques such crops may have acquired the capability to synthesize (i) one or more selectively acting toxins, in particular fungicidal toxins or insecticidal toxins, such as those which are known from toxin producing bacteria, especially those of the genus bacillus, for example endotoxins, e. g. CryIA(b), CryIA(c), CryIF, CryIF(a2), CryIIA(b), CryIIIA, CryIIIB(b1), Cry9c, VIP1, VIP2, VIP3 or VIP3A or hybrids (i. e. combinations of different domains of such toxins), modifications (by replacement of one or more of the amino acids as compared to the naturally occurring sequence, e. g. CryIIIA055) and/or truncated versions thereof, and/or (ii) an altered amount of an enzyme which is the target of a herbicide, and/or (iii) a modified form of an enzyme which is the target of a herbicide, and/or (iv) one or more enzymes which are alone or together capable of converting a herbicide into a chemical which is not toxic to the plant and/or (v) antipathogenic substances, such as, for example, the so-called "pathogenesis-related proteins". Such crops are illustrated by, but not limited to, the examples described in the following table, which are commercially available or known to the person skilled in the art or described in the quoted publications, and by any other examples which arise from stacking more than one of the traits listed in table 2.

Table 2

| Crop | Resistance gene, event, code no., or registered trademark | Resistance | Reference (see bottom of table) |
|---|---|---|---|
| Cotton | MON1445/1698 | Glyphosate resistant crop | 1) |
| Cotton | WideStrike® | Glyphosate and insect resistant crop | |
| Cotton | Roundup Ready® | Glyphosate resistant crop | 2) |
| Cotton | Roundup Ready® Flex | Glyphosate resistant crop | |
| Cotton | Roundup Ready® Flex + Bollgard II® | Glyphosate and insect resistant crop | |
| Cotton | Roundup Ready® + Bollgard I® | Glyphosate and insect resistant crop | |
| Cotton | Roundup Ready® + Bollgard II® | Glyphosate and insect resistant crop | |

(continued)

| Crop | Resistance gene, event, code no., or registered trademark | Resistance | Reference (see bottom of table) |
|---|---|---|---|
| Cotton | CP4-EPSPS | Glyphosate resistant crop | 3) |
| 1) http://www.agbios.com/dbase.php#<br>2) G. Dill, Pest Manag. Sci. 2005, 61, 219-224 and references cited therein | | | |

In the examples below, the value E which is to be expected if the activity of the individual compounds is just additive was calculated using the method of S. R. Colby (1967) "Calculating synergistic and antagonistic responses of herbicide combinations", Weeds 15, p. 22 ff.

$$E = X + Y - (XY/100)$$

where

X = effect in percent using active compound A at an application rate a;

Y = effect in percent using active compound B at an application rate b;

E = expected effect (in %) of A + B at application rates a + b.

If the experimentally determined value is higher than the value E calculated according to Colby's equation, a synergistic effect is present.

The following examples illustrate the invention without limiting it.

Examples

The defoliation and/or desiccation effect of the use of phenyluracil I or mixtures thereof according to the present invention was demonstrated by field tests (example 1).

The phenyluracil I and/or the other active ingredients according to the present invention were formulated in a suitable way, either separately or in mixture, e. g. as emulsifiable concentrates (EC), soluble concentrates (SL), suspo-emulsions (SE), suspension concentrates (SC) or water-dispersible granules (WG). The formulation(s) were suspended or emulsified in water as a distribution medium immediately prior to spraying. Afterwards, the aqueous mixture was evenly sprayed on the test plots by means of finely distributing nozzles.

The test plots of rows of fully mature crop plants at the beginning of leaf fall were of uniform size (typically between 14 and 37 square meters, each) and the distribution of, treated and untreated plots was organized according to a randomised bloc design. The plots were treated post-emergence, i. e. the aqueous mixture as described above was sprayed on the crop plants.

The evaluation of the defoliation or desiccation caused by the phenyluracil I and/or the other active ingredients according to the present invention was carried out using a scale from 0 to 100 %, compared to the untreated control plots. Here, 0 means no defoliation or desiccation and 100 means complete defoliation of the crop plants, or complete desiccation of the leaves of the crop plant.

Example 1 - Defoliation and desiccation of glyphosate resistant cotton by the phenyluracil I.7 alone as well as by a mixture of the phenyluracil I.7 and glyphosate; field test.

Table 3

| Use rate (g/ha) | | Glyphosate resistant cotton defoliation at 4 DAT (% defoliation) | | Glyphosate resistant cotton desiccation at 4 DAT (% desiccation) | |
|---|---|---|---|---|---|
| Glyphosate | Phenyluracil I.7 | Found | Calculated according to Colby's equation | Found | Calculated according to Colby's equation |
| 840 | - | 0 | - | 3 | - |

(continued)

| Use rate (g/ha) | | Glyphosate resistant cotton defoliation at 4 DAT (% defoliation) | | Glyphosate resistant cotton desiccation at 4 DAT (% desiccation) | |
|---|---|---|---|---|---|
| Glyphosate | Phenyluracil I.7 | Found | Calculated according to Colby's equation | Found | Calculated according to Colby's equation |
| - | 12.5 | 13 | - | 63 | - |
| 840 | 12.5 | 40 | 13 | 97 | 64 |

In this example, glyphosate (isopropylammonium salt) was formulated as a 360 g/l SL and Phenyluracil 1.7 as a 120 g/l EC. Prior to application, the formulated active ingredients were tank-mixed with an aqueous 140 l/ha spray solution which contained, in addition, 10 g/l of Agridex.

**Claims**

1. A method of desiccating or defoliating glyphosate resistant crops, which comprises allowing an effective amount of the 3-phenyluracil of formula I

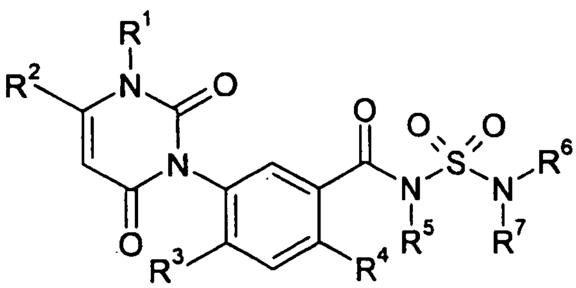

I,

wherein the variables $R^1$ to $R^7$ are as defined below:

$R^1$ is methyl;
$R^2$ is $CF_3$;
$R^3$ is fluoro;
$R^4$ is chloro;
$R^5$ is hydrogen;
$R^6$ is methyl; and
$R^7$ is isopropyl;

or an agriculturally acceptable salt thereof to act on glyphosate resistant crops in combination with glyphosate or an agriculturally acceptable salt thereof.

2. The method as claimed in claim 1 wherein the crop is selected from glyphosate resistant soybeans, cotton, potatoes, oilseed rape and sunflowers.

3. The method of claim 2, where the crop is cotton.

4. The method of anyone of the preceding claims wherein the 3-phenyluracil of formula I is used in combination with one or more other harvest aids or agriculturally acceptable salts thereof.

5. The method as claimed in claims 4, wherein the other harvest aid is selected from ethepon, thiadiazuron, diuron, paraquat, sodium chlorate, cyclanilide, S,S,S-tributylphosphorotrithioate, dimethipin and their agriculturally acceptable salts and derivatives.

6. The use of the 3-phenyluracil as defined in claim 1, in combination with glyphosate and/or optionally in combination with one or more harvest aids as defined in claims 4 or 5 for desiccating or defoliating glyphosate resistant crops.

## Patentansprüche

1. Verfahren zum Austrocknen oder Entlauben von glyphosateresistenten Kulturen, bei dem man eine wirksame Menge des 3-Phenyluracils der Formel I

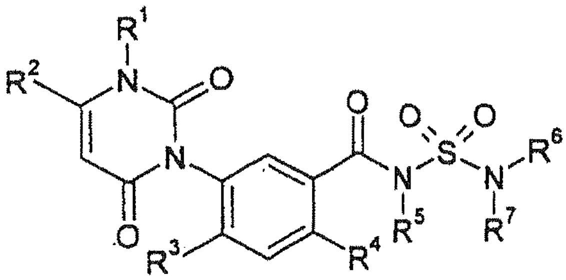

I,

in der die Variablen $R^1$ bis $R^7$ wie unten definiert sind:

$R^1$ bedeutet Methyl;
$R^2$ bedeutet $CF_3$;
$R^3$ bedeutet Fluor;
$R^4$ bedeutet Chlor;
$R^5$ bedeutet Wasserstoff;
$R^6$ bedeutet Methyl und
$R^7$ bedeutet Isopropyl;

oder ein landwirtschaftlich annehmbares Salz davon auf glyphosateresistente Kulturen in Kombination mit Glyphosate oder einem landwirtschaftlich annehmbaren Salz davon einwirken läßt.

2. Verfahren nach Anspruch 1, wobei die Kultur aus der Reihe glyphosateresistente(r) Sojabohne, Baumwolle, Kartoffeln, Raps und Sonnenblumen stammt.

3. Verfahren nach Anspruch 2, wobei es sich bei der Kultur um Baumwolle handelt.

4. Verfahren nach einem der vorhergehenden Ansprüche, wobei das 3-Phenyluracil der Formel I in Kombination mit einem oder mehr weiteren Erntehilfsmitteln oder landwirtschaftlich annehmbaren Salzen davon verwendet wird.

5. Verfahren nach Anspruch 4, wobei das weitere Erntehilfsmittel aus der Reihe Ethephon, Thiadiazuron, Diuron, Paraquat, Natriumchlorat, Cyclanilid, S,S,S-Tributylphosphortrithioat, Dimethipin und ihren landwirtschaftlich annehmbaren Salzen und Derivaten stammt.

6. Verwendung des in Anspruch 1 definierten 3-Phenyluracils in Kombination mit Glyphosate und/oder gegebenenfalls in Kombination mit einem oder mehr wie in den Ansprüchen 4 oder 5 definierten Erntehilfsmitteln zum Austrocknen oder Entlauben von glyphosateresistenten Kulturen.

## Revendications

1. Méthode de dessiccation ou de défoliation de cultures résistantes au glyphosate, comprenant de permettre à une quantité efficace du 3-phényluracile de formule I

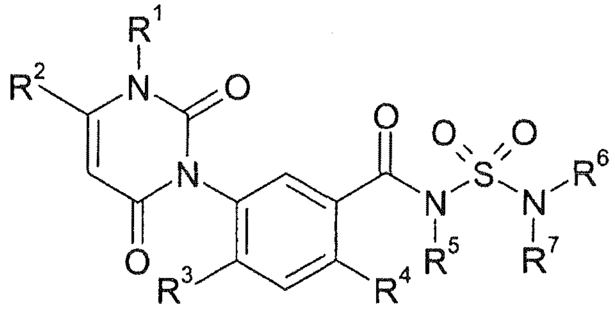 I,

dans laquelle les variables $R^1$ à $R^7$ sont telles que définies ci-après :

$R^1$ est méthyle ;
$R^2$ est $CF_3$ ;
$R^3$ est fluoro ;
$R^4$ est chloro ;
$R^5$ est hydrogène ;
$R^6$ est méthyle ; et
$R^7$ est isopropyle ;

ou un sel de celui-ci acceptable sur le plan agricole, d'agir sur les cultures résistantes au glyphosate en association avec du glyphosate ou un sel de celui-ci acceptable sur le plan agricole.

**2.** Méthode selon la revendication 1, dans laquelle la culture est choisie parmi les sojas, le coton, les pommes de terre, le colza et les tournesols résistants au glyphosate.

**3.** Méthode selon la revendication 2, dans laquelle la culture est le coton.

**4.** Méthode selon l'une quelconque des revendications précédentes, dans laquelle le 3-phényluracile de formule I est utilisé en association avec un ou plusieurs autres auxiliaires de récolte ou des sels de ceux-ci acceptables sur le plan agricole.

**5.** Méthode selon la revendication 4, dans laquelle l'autre auxiliaire de récolte est choisi parmi l'éthéphon, le thidiazuron, le diuron, le paraquat, le chlorate de sodium, le cyclanilide, le S,S,S-tributylphosphorotrithioate, la diméthipine, et leurs sels et dérivés acceptables sur le plan agricole.

**6.** Utilisation du 3-phényluracile tel que défini selon la revendication 1, en association avec du glyphosate et/ou éventuellement en association avec un ou plusieurs auxiliaires de récolte tels que définis selon les revendications 4 et 5, pour la dessiccation ou la défoliation de cultures résistantes au glyphosate.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0183459 A
- WO 0324221 A
- WO 04080183 A


### Non-patent literature cited in the description


- **G. Dill.** *Pest Manag. Sci.,* 2005, vol. 61, 219-224